# EUROPEAN PATENT APPLICATION

(11) **EP 1 357 733 A1**
(43) Date of publication of application: **29.10.2003**
(21) Application number: 02445053.8
(22) Date of filing: 25.04.2002
(51) Int. Cl.: H04M 19/04

(54) **Audio bandwidth extending system and method**

(71) Applicant: Sony Ericsson Mobile Communications AB, 221 88 Lund (SE)
(72) Inventor: Körner, Peter, 222 20 Lund (SE)
(74) Representative: Akerman, Marten Lennart

(57) **Abstract**

The invention relates to a virtual audio bandwidth extender, and more particularly a device for increasing the perceived bandwidth of audio signals in equipment having limited bandwidth, especially in mobile telephones. The invention also relates to a communication apparatus comprising such a device. The invention provides a device for increasing the perceived bandwidth in an audio signal path with limited bandwidth, comprising: an input terminal (1) for connecting an audio signal, and an output terminal (2) for connecting a speaker unit for generating an acoustic signal. According to the invention the device comprises a splitter (3) dividing the audio path into two branches, a first branch (4) for passing a part of the audio signal substantially without processing, and a second branch (5) for processing a part of the audio signal. The second branch comprises means for producing harmonics (7, 8, 9) of the audio signal. A combiner (6) is provided for adding the harmonics produced in the second branch to the part of the signal in the first branch at the output terminal. Thereby, the bandwidth is virtually extended resulting in enhanced quality of the audio signal.

## Description

### Field of invention

The present invention relates to a virtual audio bandwidth extender, and more particularly a device for increasing the perceived bandwidth of audio signals, especially in mobile telephones. The invention also relates to a communication apparatus comprising such a device. The invention provides a device for adding harmonics to a sound signal in equipment having limited bandwidth. Thereby, the bandwidth is virtually extended resulting in enhanced quality of the audio signal.

### State of the art

It is known in the art that adding harmonics to an audio signal results in a richer sound. The document US 2001/0034252 describes a ringing device for a portable telephone. The device adds harmonics to the fundamental ring signal in order to produce a richer sound. In-band harmonics are added based only on sinusoidal signals for ringers.

The document US 3,828,133 describes a speech quality improving system for low frequency audio signals in communication systems such as telephone and radio systems. The input signal is divided into two branches and higher harmonics are generated in one branch which is then combined with the original signal to provide a signal having a richer sound.

Music sound effect generators and synthesizers include ways of altering the harmonic structure of the instrument and synthetic signals, but for other purposes than giving an impression of added bandwidth.

In contrast, the present invention seeks to solve the problem of extending the perceived bandwidth of audio signals, particularly polyphonic ring signals.

### Summary of the invention

The present invention solves the aforementioned problems by providing a device for increasing the perceived bandwidth in an audio signal path with limited bandwidth, comprising: an input terminal for connecting an audio signal, and an output terminal for connecting a speaker unit for generating an acoustic signal.

According to the invention the device comprises a splitter dividing the audio path into two branches, a first branch for passing a part of the audio signal substantially without processing, and a second branch for processing a part of the audio signal. The second branch comprises means for producing harmonics of the audio signal. A combiner is provided for adding the harmonics produced in the second branch to the part of the signal in the first branch at the output terminal. Preferrably, the means for producing harmonics comprises a filter, a harmonic generator and an adjustable amplifier.

According to another aspect of the invention, the invention provides a communication apparatus including such a device for increasing the perceived bandwidth.

### Brief description of the drawing

The invention will be described in detail below with reference to the accompanying drawing, in which:

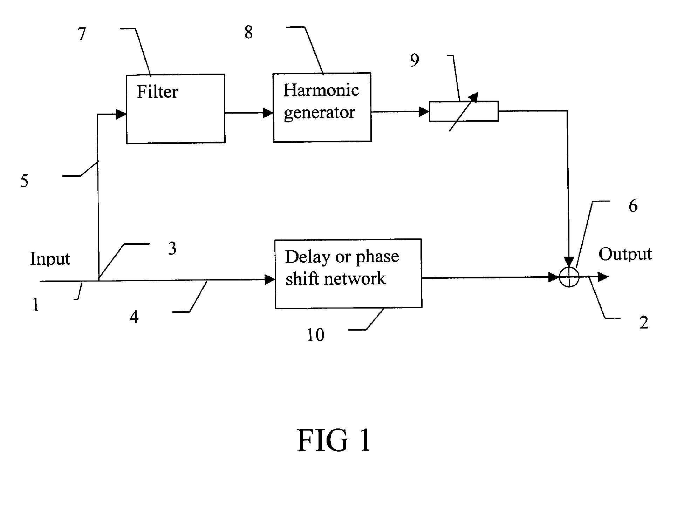

fig. 1 is a schematic illustration of an audio path incorporating the invention.

### Detailed description of preferred embodiments

In some electronic equipment, such as in portable and mobile telephones and the like, the sound generator and related electronics of the audio path often suffer from limited audio bandwidth, typically limited to 3.4 kHz, which will impair the perceived audio quality. This is true both for playing back polyphonic ring signals and for speech. To enhance the listening experience, a certain level of synthetic audio harmonics should be added in the audio path between the ringer or audio source and the speaker system. Suitably the added harmonics are second or higher harmonics, which will add a sense of clarity and brilliance as well as higher sound pressure level.

In case of speech audio signals, such as GSM or Bluetooth audio, the added harmonics will increase speech clarity and intelligibility.

At present, no similar technique is used in telephones. Prototype polyphonic ringer solutions having limited bandwidth simply lack output above a certain frequency, typically 3.4 kHz, as does GSM audio.

Restricted audio bandwidth creates a dull sonic impression similar to that of AM radio. Polyphonic ringers with limited bandwidth sound weaker than solutions having extended bandwidth using the same output level.

Fig. 1 shows an audio path incorporating a device according to the present invention. The audio path has an input terminal 1 to which an audio source is connected. The audio source may be a ringer, preferably a polyphonic ringer, or circuitry connected with the speech signals. The audio path has an output terminal 2 connected to a speaker system. The speaker system may be the same for both ringer signals and speech. The speaker system may also be separate for ring signals and speech, in which case two audio paths are provided.

A splitter 3 divides the audio path into two branches: a first branch 4 which is a line possibly without any processing and a second branch 5 for processing the divided path of the audio signal. The two branches are brought together by means of a combiner 6.

The second branch 5 is provided with means for adding harmonics to the audio signal. It includes a filter 7 with selected slope separating the upper portion of the pass band or bandwidth. The output signal of the filter is converted to out-of-band harmonics by means of a harmonic generator 8. The harmonic generator 8 may be a selected nonlinear circuit or a digital signal processor (DSP function), the signal delay of which should be taken into account. The second branch should also include an adjustable amplifier 9 for adding a defined extent of the created harmonics to the original signal in the combiner 6.

The first branch may be provided with means 10 for providing a delay or a phase shift corresponding to the parts of the second branch, if necessary.

Predominantly second harmonics should be used, giving the subjective impression of an added octave. Harmonics of higher order may also be used but should be attenuated gradually. Even order harmonics are preferred. The settings for different user cases such as polyphonic ring signals or speech should be different.

For polyphonic sounds, especially if they are of synthetic origin, higher levels of harmonics, also containing higher order harmonics, can be added than for speech. For polyphonic sounds, adding harmonics could also be used as a means for creating new types of sounds, possibly dynamically controlled by software.

The implementation for adding the harmonics will range from discrete components, like diode networks, integrated circuits and ASICs (Application Specific Integrated Circuits) to digital signal processing software or a combination of these.

The invention has several advantages over the prior art. The sonic experience for polyphonic ringers will be enhanced without having to increase bandwidth or ringer memory size, which should also reduce costs and save space. The perceived sound pressure level will increase, which will provide an improved alert function.

Speech audio, such as GSM audio, would benefit from enhanced clarity. While keeping the GSM specification, speech intelligibility would improve, which would be helpful also in noisy situations and for people having hearing loss. For Bluetooth audio the added clarity could also counteract level dependent loss of high frequencies due to the CVSD coding (Continuously Variable Slope Delta modulation), having increased treble attenuation at increasing sound levels. This could necessitate different settings for Bluetooth audio than for other cases.

The invention is particularly useful in portable and mobile telephones, but may also be included in electronic equipment such as portable radio communication equipment, pagers, communicators, electric organizers, smart phones or the like. The invention is only limited to the claims below.

## Claims

1. Device for increasing the perceived bandwidth in an audio signal path with limited bandwidth, comprising: an input terminal (1) for connecting an audio signal, and an output terminal (2) for connecting a speaker unit for generating an acoustic signal, **characterised by** a splitter (3) dividing the audio path into two branches, a first branch (4) for passing a part of the audio signal substantially without processing, and a second branch (5) for processing a part of the audio signal, the second branch comprising means (7, 8, 9) for producing harmonics of the audio signal; and a combiner (6) for adding the harmonics produced in the second branch (5) to the part of the signal in the first branch (4) at the output terminal (2).

2. Device according to claim 1, **characterised in that** the means for producing harmonics comprises a filter (7), a harmonic generator (8) and an adjustable amplifier (9).

3. Device according to claim 2, **characterised in that** the filter (7) is arranged to separate the upper portion of the pass band as an input to the harmonic generator (8).

4. Device according to claim 2 or 3, **characterised in that** the harmonic generator (8) comprises a nonlinear circuit.

5. Device according to claim 2 or 3, **characterised in that** the harmonic generator (8) comprises a digital signal processor (DSP).

6. Device according to any one of claims 1 to 5, **characterised in that** the means for producing harmonics is arranged to add predominantly second harmonics.

7. Device according to any one of claims 1 to 5, **characterised in that** the means for producing harmonics is arranged to add predominantly even harmonics.

8. Device according to any one of claims 1 to 7, **characterised in that** the audio signal is a ring signal.

9. Device according to claim 8, **characterised in that** the audio signal is a polyphonic ring signal.

10. Device according to any one of claims 1 to 7, **characterised in that** the audio signal is a speech signal, such as GSM or Bluetooth™ audio.

11. Device according to any one of claims 1 to 10, **characterised in that** the first branch (4) which is provided with means (10) for providing a delay or a phase shift.

12. Communication apparatus, **characterised by** including a device for increasing the perceived bandwidth according to any one of claims 1 to 11.

13. Communication apparatus, **characterised by** including a device for increasing the perceived bandwidth according to claim 9, comprising a polyphonic sound effect generator for producing the polyphonic ring signal.

14. Communication apparatus according to claims 12 or 13, **characterised in that** the communication apparatus is a portable telephone, a pager, a communicator or an electronic organiser.
